# EUROPEAN PATENT APPLICATION

(11) **EP 4 344 923 A1**
(43) Date of publication of application: **03.04.2024**
(21) Application number: 22824261.6
(22) Date of filing: 15.06.2022
(51) Int. Cl.: B60K 26/02, F02D 41/04

(54) **METHOD AND APPARATUS FOR CORRECTING OPENING DEGREE OF ACCELERATOR PEDAL, DEVICE, PROGRAM, MEDIUM, CONTROLLER, AND VEHICLE**

(30) Priority: 18.06.2021 CN 202110680942
(71) Applicant: Great Wall Motor Company Limited, Baoding, Hebei 071000 (CN)
(72) Inventor: ZHANG, Hao, Baoding, Hebei 071000 (CN); DONG, Jie, Baoding, Hebei 071000 (CN)
(74) Representative: Klunker IP Patentanwälte PartG mbB
(86) International application number: PCT/CN2022/099036
(87) International publication number: WO 2022/262786

(57) **Abstract**

The present disclosure relates to a method and a device for correcting an opening degree of an accelerator pedal, an apparatus, a program, a medium, a controller and a vehicle; and the method includes: obtaining a brake depression state corresponding to a brake pedal of a vehicle; determining a state of the accelerator pedal according to the brake depression state; obtaining a measured voltage value of an accelerator pedal sensor of the vehicle in case that the accelerator pedal is in a non-depression state; and adjusting a zero voltage of the accelerator pedal sensor according to the measured voltage value to correct the opening degree of the accelerator pedal, and the zero voltage is a voltage of the accelerator pedal at a zero position. That is, the present disclosure determines the state of the accelerator pedal based on the brake depression state corresponding to the brake pedal, and obtains the measured voltage value when the state of the accelerator pedal is in the non-depression state, such that the measured voltage value is more accurate. Therefore, the adjusted opening degree of the accelerator pedal based on the measured voltage value is also more accurate, and the safety of the vehicle is improved.

## Description

### CROSS REFERENCE TO RELATED APPLICATION

The present disclosure claims priority of Chinese Patent Application, with Application No. 202110680942.9, submitted to CNIPA on June 18, 2021, entitled "method and device for correcting opening degree of accelerator pedal, apparatus, program, medium, controller and vehicle", the content of which is incorporated in the present disclosure by reference.

### TECHNICAL FIELD

The present disclosure relates to the technical filed of vehicles, and more particularly to a method and a device for correcting an opening degree of an accelerator pedal, an apparatus, a program, a medium, a controller and a vehicle.

### BACKGROUND

The accelerator pedal is the main component that the driver controls the vehicle, and the accelerator pedal signal directly reflects the acceleration demand of the driver for the entire vehicle, which has a significant impact on the safe operation of the vehicle. The electronic accelerator pedal is equipped with an accelerator pedal sensor, when the driver depresses on the accelerator pedal, the vehicle controller will collect the opening changes and acceleration of the accelerator pedal sensor, the driving intention of the driver can be determined based on the built-in algorithm, and the corresponding control signal is sent to the vehicle controller to control the power output of the electric vehicle motor.

It can be seen that whether the accelerator pedal signal is normal has a crucial impact on the power and safety of the vehicle. During the driving process of electric vehicles, due to factors such as device aging, the zero position of the accelerator pedal, i.e. the position of the accelerator pedal under no force, will change, which results in poor safety of the vehicle.

### SUMMARY

The present disclosure aims to address at least one of the technical problems in the relevant technology to a certain extent.

Therefore, a first object of the present disclosure is to provide a method for correcting an opening degree of an accelerator pedal, so as to solve the technical problem of poor vehicle safety caused by the influence of factors such as device aging, the zero position of the accelerator pedal, i.e. the position of the accelerator pedal under no force, will change, and resulting in poor safety of the vehicle in the existing technology.

A second object of the present disclosure is to provide a device for correcting an opening degree of an accelerator pedal.

A third object of the present disclosure is to provide a controller.

A fourth object of the present disclosure is to provide a vehicle.

In order to achieve above objects, embodiments of a first aspect of the present disclosure proposes a method for correcting an opening degree of an accelerator pedal, and the method includes steps of: obtaining a brake depression state corresponding to a brake pedal of a vehicle; determining a state of the accelerator pedal according to the brake depression state; obtaining a measured voltage value of an accelerator pedal sensor of the vehicle in case that the accelerator pedal is in a non-depression state; and adjusting a zero voltage of the accelerator pedal sensor according to the measured voltage value to correct the opening degree of the accelerator pedal, and the zero voltage is a voltage of the accelerator pedal at a zero position.

According to an embodiment of the present disclosure, the method further includes: the brake depression state includes a brake depression duration and a brake depression depth, and the step of determining the state of the accelerator pedal according to the brake depression state includes: determining that the state of the accelerator pedal is in the non-depression state when the brake depression duration is greater than or equal to the preset depression duration and the brake depression depth is greater than or equal to the preset depression depth.

According to an embodiment of the present disclosure, the step of obtaining the measured voltage value of the accelerator pedal sensor of the vehicle includes: obtaining a plurality of voltage values of the accelerator pedal sensor of the vehicle, periodically; and taking an average value of the plurality of voltage values as the measured voltage value.

According to an embodiment of the present disclosure, the method further includes: the step of adjusting the zero voltage of the accelerator pedal sensor according to the measured voltage value includes: obtaining a voltage difference between the measured voltage value and a preset voltage value; determining a voltage adjustment value according to the voltage difference in case that it is determined that the voltage difference is less than or equal to a preset difference threshold; and adjusting the zero voltage of the accelerator pedal sensor according to the voltage adjustment value.

According to an embodiment of the present disclosure, before the step of determining the voltage adjustment value according to the voltage difference, the method further includes: obtaining a depressing number of the brake pedal being depressed; and the step of determining the voltage adjustment value according to the voltage difference includes: determining the voltage adjustment value according to the depressing number and the voltage difference.

According to an embodiment of the present disclosure, the step of determining the voltage adjustment value according to the depressing number and the voltage difference includes: obtaining an adjustment proportion corresponding to the depressing number; and taking a product of the voltage difference and the adjustment proportion as the voltage adjustment value.

According to an embodiment of the present disclosure, the step of obtaining the adjustment proportion corresponding to the depressing number includes: determining the adjustment proportion corresponding to the depressing number by presetting a proportion correlation relationship, and the proportion correlation relationship includes a corresponding relationship between different depressing numbers and adjustment proportions.

The embodiments of the first aspect of the present disclosure proposes the method for correcting the opening degree of the accelerator pedal, by obtaining a brake depression state corresponding to a brake pedal of a vehicle; determining a state of the accelerator pedal according to the brake depression state; obtaining a measured voltage value of an accelerator pedal sensor of the vehicle in case that the accelerator pedal is in a non-depression state; and adjusting a zero voltage of the accelerator pedal sensor according to the measured voltage value to correct the opening degree of the accelerator pedal, and the zero voltage is a voltage of the accelerator pedal at a zero position. That is, the present disclosure determines the state of the accelerator pedal based on the brake depression state corresponding to the brake pedal, and obtains the measured voltage value when the state of the accelerator pedal is in the non-depression state, such that the measured voltage value is more accurate. Therefore, the adjusted opening degree of the accelerator pedal based on the measured voltage value is also more accurate, and the safety of the vehicle is improved.

In order to achieve above objects, embodiments of a second aspect of the present disclosure proposes a device for correcting an opening degree of an accelerator pedal, and the device includes: a first state obtaining module, configured for obtaining a brake depression state corresponding to a brake pedal of a vehicle; a second state obtaining module, configured for determining a state of the accelerator pedal according to the brake depression state; a voltage obtaining module, configured for obtaining a measured voltage value of an accelerator pedal sensor of the vehicle in case that the accelerator pedal is in a non-depression state; and an adjustment module, configured for adjusting a zero voltage of the accelerator pedal sensor according to the measured voltage value to correct the opening degree of the accelerator pedal, and the zero voltage is a voltage of the accelerator pedal at a zero position.

According to an embodiment of the present disclosure, the brake depression state includes a brake depression duration and a brake depression depth; and the second state obtaining module is further configured for determining that the state of the accelerator pedal is in the non-depression state when the brake depression duration is greater than or equal to the preset depression duration and the brake depression depth is greater than or equal to the preset depression depth.

According to an embodiment of the present disclosure, the voltage obtaining module is further configured for obtaining a plurality of voltage values of the accelerator pedal sensor of the vehicle, periodically; and taking an average value of the plurality of voltage values as the measured voltage value.

According to an embodiment of the present disclosure, the adjustment module is further configured for obtaining a voltage difference between the measured voltage value and a preset voltage value; determining a voltage adjustment value according to the voltage difference in case that it is determined that the voltage difference is less than or equal to a preset difference threshold; and adjusting the zero voltage of the accelerator pedal sensor according to the voltage adjustment value.

According to an embodiment of the present disclosure, the adjustment module is further configured for obtaining a depressing number of the brake pedal being depressed; and the step of determining the voltage adjustment value according to the voltage difference includes: determining the voltage adjustment value according to the depressing number and the voltage difference.

According to an embodiment of the present disclosure, the adjustment module is further configured for obtaining an adjustment proportion corresponding to the depressing number; and taking a product of the voltage difference and the adjustment proportion as the voltage adjustment value.

According to an embodiment of the present disclosure, the adjustment module is further configured for determining the adjustment proportion corresponding to the depressing number by presetting a proportion correlation relationship, and the proportion correlation relationship includes a corresponding relationship between different depressing numbers and adjustment proportions.

The embodiments of the second aspect of the present disclosure proposes the device for correcting the opening degree of the accelerator pedal, by obtaining a brake depression state corresponding to a brake pedal of a vehicle; determining a state of the accelerator pedal according to the brake depression state; obtaining a measured voltage value of an accelerator pedal sensor of the vehicle in case that the accelerator pedal is in a non-depression state; and adjusting a zero voltage of the accelerator pedal sensor according to the measured voltage value to correct the opening degree of the accelerator pedal, and the zero voltage is a voltage of the accelerator pedal at a zero position. That is, the present disclosure determines the state of the accelerator pedal based on the brake depression state corresponding to the brake pedal, and obtains the measured voltage value when the state of the accelerator pedal is in the non-depression state, such that the measured voltage value is more accurate. Therefore, the adjusted opening degree of the accelerator pedal based on the measured voltage value is also more accurate, and the safety of the vehicle is improved.

In order to achieve above objects, embodiments of a third aspect of the present disclosure proposes a controller, which includes: a storage device on which computer programs are stored; and a processing device configured for executing the computer programs in the storage device to implement the steps of the method in the first aspect of the present disclosure.

In order to achieve above objects, embodiments of a fourth aspect of the present disclosure proposes a vehicle, which includes the controller in the third aspect of the present disclosure.

In order to achieve above objects, embodiments of a fifth aspect of the present disclosure proposes a computing processing apparatus, which includes: a memory, in which computer-readable codes are stored; and one or more processors, when the computer-readable codes are executed by the one or more processors, causes the computing processing apparatus to implement the method for correcting the opening degree of the accelerator pedal in the first aspect of the present disclosure.

In order to achieve above objects, embodiments of a sixth aspect of the present disclosure proposes a computer program, which includes computer-readable codes, which when executed on a computing processing apparatus, causes the computing processing apparatus to implement the method for correcting the opening degree of the accelerator pedal in the first aspect of the present disclosure.

In order to achieve above objects, embodiments of a seventh aspect of the present disclosure proposes a computer readable storage medium, in which the computer program in sixth aspect of the present disclosure is stored.

The additional aspects and advantages of the present disclosure will be partially provided in the following description, and some will become apparent from the following description or learned through the practice of the present disclosure.

### BRIEF DESCRIPTION OF THE DRAWINGS

The above and/or additional aspects and advantages of the present disclosure will become apparent and easy to understand from the description of embodiments in conjunction with the accompanying drawings, in which:
FIG. 1 is a flowchart of a method for correcting an opening degree of an accelerator pedal provided in an embodiment of the present disclosure;
FIG. 2 is a flowchart of another method for correcting an opening degree of an accelerator pedal provided in an embodiment of the present disclosure;
FIG. 3 is a structural schematic diagram of a device for correcting an opening degree of an accelerator pedal provided in an embodiment of the present disclosure;
FIG. 4 is a block diagram of a controller illustrated according to an exemplary embodiment.
FIG. 5 is a structural schematic diagram of a computing processing apparatus provided in an embodiment of the present disclosure; and
FIG. 6 is a schematic diagram of a storage unit for portable or fixed implementation of program code according to the method of the present disclosure.

### DETAILED DESCRIPTION OF EMBODIMENTS

Embodiments of the present disclosure are described in detail below, examples of which are shown in the accompanying drawings, where identical or similar labels from beginning to end indicate identical or similar elements or elements having identical or similar functions. The embodiments described below by reference to the attached drawings are illustrative and are intended to interpret the present disclosure and are not to be construed as a limitation of the present disclosure.

In the description below, terms such as "first" and "second" are used only to distinguish the purpose of the description and are not to be understood as indicating or suggesting relative importance, nor as indicating or suggesting order.

First, the application scenarios of the present disclosure are explained. Since the accelerator pedal of the vehicle is mounted with an accelerator pedal sensor, when the driver depresses on the accelerator pedal, the vehicle controller will collect the opening change and acceleration of the accelerator pedal sensor, the driving intention of the driver can be determined based on the built-in algorithm, and the corresponding control signal is sent to the vehicle controller to control the power output of the electric vehicle motor. It can be seen that the accelerator pedal sensor will directly affect the power output of the electric vehicle motor, for the same model of vehicles, even if the accelerator pedal sensors of the same model are used, due to the error of the accelerator pedal sensors themself, it will lead to differences in the power output of the electric vehicle motor, resulting in poor consistency of different vehicles of the same model. In addition, during the entire life cycle of the vehicle, with the aging of the accelerator pedal sensor, the zero position of the accelerator pedal, that is, the position of the accelerator pedal under no force, will change, resulting in poor safety of the vehicle.

In order to solve the above technical problems, the present disclosure provides a method and a device for correcting the opening degree of the accelerator pedal, a controller, and a vehicle, the state of the accelerator pedal can be determined based on the brake depression state corresponding to the brake pedal, and obtains the measured voltage value when the state of the accelerator pedal is in the non-depression state, such that the measured voltage value is more accurate. Therefore, the adjusted opening degree of the accelerator pedal based on the measured voltage value is also more accurate, and the safety of the vehicle is improved.

The present disclosure is explained below in conjunction with specific embodiments.

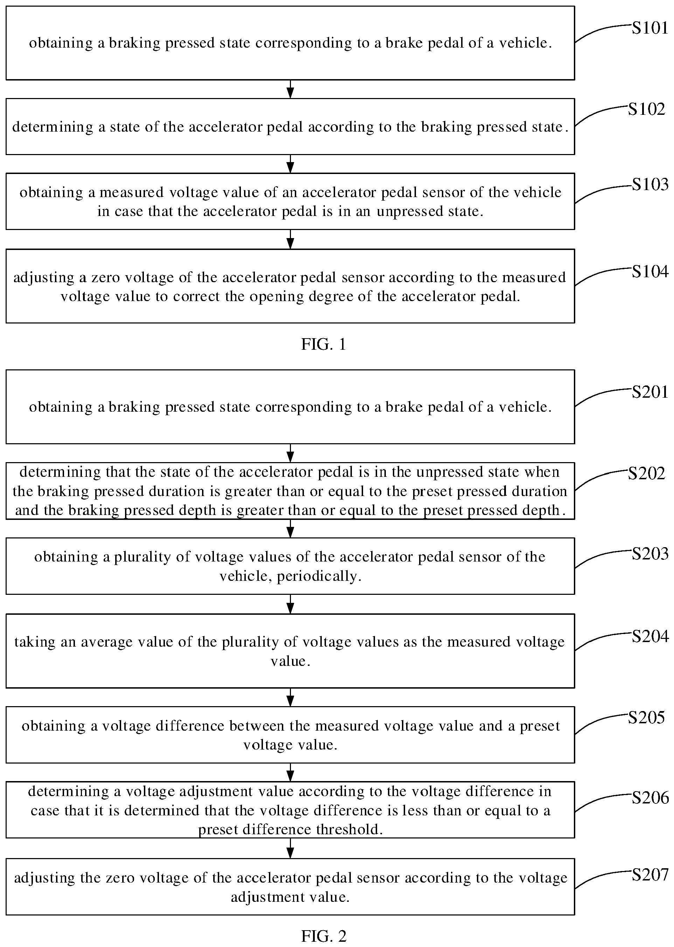

FIG. 1 is a flowchart of a method for correcting the opening degree of the accelerator pedal provided by the embodiment of the present disclosure, as shown in FIG. 1. The method may include:
In S101, obtaining a brake depression state corresponding to a brake pedal of a vehicle.

The brake depression state includes a brake depression duration and a brake depression depth.

In the step, the brake depression state corresponding to the brake pedal of the vehicle can be periodically collected during the driving process of the vehicle, and the collection period of the brake depression state can be determined according to the current driving condition of the vehicle. In the case where the current driving condition is high-speed, a larger collection period can be set, for example, the collection period can be 50ms. In the case where the current driving condition is urban road condition, a smaller collection period can be set, for example, the collection period can be 20ms. The method of setting the collection period is not limited in the present disclosure.

In S102, determining a state of the accelerator pedal according to the brake depression state.

It should be noted that according to the routine operation of the driver, during the normal running of the vehicle, the driver will not depress the accelerator pedal and the brake pedal at the same time. When the brake pedal is depressed, the accelerator pedal is in the non-depression state.

In the step, after obtaining the brake depression state corresponding to the brake pedal of the vehicle, it can first determine whether the brake pedal of the vehicle is in the depression state according to the brake depression state. When the brake pedal is in the depression state, the accelerator pedal of the vehicle can be determined to be in the non-depression state.

In S103, obtaining a measured voltage value of an accelerator pedal sensor of the vehicle in case that the accelerator pedal is in a non-depression state.

In the step, when the state of the accelerator pedal is determined to be in the non-depression state, a plurality of voltage values of the accelerator pedal sensor of the vehicle can be obtained when the state of the accelerator pedal is in the non-depression state, and the average value of plurality of voltage values is taken as the measured voltage value.

In S104, adjusting a zero voltage of the accelerator pedal sensor according to the measured voltage value to correct the opening degree of the accelerator pedal.

In the embodiment, the zero voltage is a voltage of the accelerator pedal at a zero position.

In the step, after obtaining the measured voltage value of the accelerator pedal sensor of the vehicle, the voltage adjustment value can be determined according to the measured voltage value and the preset voltage value, and the zero voltage of the accelerator pedal sensor can be adjusted according to the voltage adjustment value. After the zero voltage of the accelerator pedal sensor is adjusted, the opening degree of the accelerator pedal is also corrected. The preset voltage value can be the theoretical voltage value of the accelerator pedal sensor when the accelerator pedal is at the zero position.

Using the above method, the state of the accelerator pedal can be determined according to the brake depression state corresponding to the brake pedal, and the measured voltage value can be obtained when the accelerator pedal is in the non-depression state, such that the measured voltage value is more accurate. Therefore, the adjusted opening degree of the accelerator pedal based on the measured voltage value is also more accurate, and the safety of the vehicle is improved.

FIG. 2 is a flow diagram of another method of correcting the opening degree of the accelerator pedal provided by an embodiment of the present disclosure, as shown in FIG. 2, which may include:
In S201, obtaining a brake depression state corresponding to a brake pedal of a vehicle.

The brake depression state includes a brake depression duration and a brake depression depth.

In the step, the brake depression state corresponding to the brake pedal of the vehicle can be periodically collected during the driving process of the vehicle, and the collection period of the brake depression state can be determined according to the current driving condition of the vehicle. In the case where the current driving condition is high-speed, a larger collection period can be set, for example, the collection period can be 50ms. In the case where the current driving condition is urban road condition, a smaller collection period can be set, for example, the collection period can be 20ms. The method of setting the collection period is not limited in the present disclosure.

For example, the timing starts when the brake pedal of the vehicle is detected to be in the depression state, and the timing stops when the brake pedal switches from the depression state to the non-depression state. The timing duration is the brake depression duration corresponding to the brake pedal. In addition, the brake depression depth corresponding to the brake pedal can be periodically obtained when the brake pedal is in the depression state.

In S202, determining that the state of the accelerator pedal is in the non-depression state when the brake depression duration is greater than or equal to the preset depression duration and the brake depression depth is greater than or equal to the preset depression depth.

It should be noted that according to the routine operation of the driver, during the normal running of the vehicle, the driver will not depress the accelerator pedal and the brake pedal at the same time. When the brake pedal is pressed, the accelerator pedal is in the non-depression state. However, the driver may also touch the brake pedal when depresses the accelerator pedal, which results in the brake pedal being also in the depression state. In order to improve the accuracy of the obtained state of the accelerator pedal, whether the brake pedal is in the depression state can be further determined according to the brake depression duration and brake depression depth of the brake pedal.

In the step, after the brake depression duration and depth corresponding to the brake pedal of the vehicle are obtained, the preset depression duration and depth can be obtained, which can be obtained in advance according to the test.

Further, comparing the brake depression duration with the preset depression duration, as well as the brake depression depth with the preset depression depth, when the brake depression duration is greater than or equal to the preset depression duration, and the brake depression depth is greater than or equal to the preset depression depth, it can be determined that the brake pedal is in the depression state, and the state of the accelerator pedal is not pressed.

In S203, obtaining a plurality of voltage values of the accelerator pedal sensor of the vehicle, periodically.

In the step, the voltage value of the accelerator pedal sensor of the vehicle starts to be collected periodically when the brake pedal is detected to be in the depression state, and stops collecting the voltage value of the accelerator pedal sensor of the vehicle when the brake pedal is detected to change from the depression state to the non-depression state, so as to obtain the plurality of voltage values of the accelerator pedal sensor of the vehicle.

It should be noted that when the accelerator pedal of the vehicle switches from the depression state to the non-depression state, the accelerator pedal does not immediately return to the zero position. In this case, the accelerator pedal is also in the non-depression state when the brake pedal of the vehicle is already in the depression state. Alternatively, when the brake pedal of the vehicle is switched from the depression state to the non-depression state, the brake pedal does not immediately return to the zero position, in this case, when the brake pedal of the vehicle is still in the depression state, the accelerator pedal of the vehicle has been switched from the non-depression state to the depression state. In this way, the voltage values of the accelerator pedal sensor collected during the initial time period and the last time period when the brake pedal is in the depression state are invalid.

In one possible implementation, after the plurality of voltage values of the accelerator pedal sensor of the vehicle are periodically obtained, the effective collection period can be determined according to the brake depression duration corresponding to the brake pedal, and the voltage values in the non-effective collection period among the plurality of voltage values can be filtered out. The beginning moment of the effective collection period can be the moment corresponding to the first preset duration when the brake pedal is in the depression state, and the end moment of the effective collection period can be the moment corresponding to the second preset duration before the brake pedal switches from the depression state to the non-depression state. In this way, the plurality of voltage values obtained are more accurate by filtering the voltage values collected in non effective collection period.

In S204, taking an average value of the plurality of voltage values as the measured voltage value.

In S205, obtaining a voltage difference between the measured voltage value and a preset voltage value.

In the step, the preset voltage value can be the theoretical voltage value of the accelerator pedal sensor when the accelerator pedal is in the zero position.

In the step, after the measured voltage value of the accelerator pedal sensor of the vehicle is obtained, the preset voltage value can be obtained and the voltage difference between the measured voltage value and the preset voltage value can be calculated.

In S206, determining a voltage adjustment value according to the voltage difference in case that it is determined that the voltage difference is less than or equal to a preset difference threshold.

In the step, after the voltage difference between the measured voltage value and the preset voltage value is obtained, it can first determine whether the measured voltage value is abnormal according to the voltage difference value. If the voltage difference value is greater than the preset difference threshold, the measured voltage value is an abnormal value, and no subsequent correction will be carried out. When the voltage difference is less than or equal to the preset difference threshold, it means that the measured voltage value is a normal value, and the voltage difference can be used as the voltage adjustment value.

Considering that when the voltage adjustment value is larger, more adjustment at one time may lead to more obvious changes in the opening degree of the accelerator pedal of the vehicle, which will affect the driving experience of the driver. In one possible implementation, an adjustment proportion can be obtained, and the product of the voltage difference and the adjustment proportion can be used as the voltage adjustment value. The adjustment proportion can be determined according to the application mode of the vehicle. For example, when the application mode of the vehicle is debugging mode, such as, the vehicle is in the production stage of the production line, a larger adjustment proportion can be set, for example, the adjustment proportion can be 50%, and when the application mode of the vehicle is in the normal use mode, for example, the user purchases the vehicle in the normal use stage, a smaller adjustment proportion may be set, for example, the adjustment proportion may be 10%, and the setting of the adjustment proportion is not limited in the present disclosure.

It should be noted that when the application mode of the vehicle is the debugging mode, a depressing number of the brake pedal being depressed of the vehicle is less. In one possible implementation mode, before the voltage adjustment value is determined according to the voltage difference, the depressing number of the brake pedal being depressed is first obtained, and the voltage adjustment value is determined according to the depressing number and the voltage difference. After the depressing number of the brake pedal being depressed is obtained, the adjustment proportion corresponding to the depressing number can be obtained first, and the product of the voltage difference and the adjustment proportion is taken as the voltage adjustment value.

After the depressing number of the brake pedal being depressed is obtained, the adjustment proportion corresponding to the depressing number can be determined by presetting a proportional correlation relationshipship, which includes the corresponding relationship ship between different depressing numbers and adjustment proportions. For example, if the depressing number is less than or equal to 5 times, the corresponding adjustment proportion can be 50%, and if the depressing number is greater than 5 times, the corresponding adjustment proportion can be 10%.

In S207, adjusting the zero voltage of the accelerator pedal sensor according to the voltage adjustment value.

Using the above method, the state of the accelerator pedal can be determined according to the brake depression state corresponding to the brake pedal, and the measured voltage value can be obtained when the accelerator pedal is in the non-depression state, such that the measured voltage value is more accurate. Therefore, the adjusted opening degree of the accelerator pedal based on the measured voltage value is also more accurate, and the safety of the vehicle is improved. Further, the adjustment proportion can be determined according to the depressing number of the brake pedal being depressed of the vehicle, and the voltage of the accelerator pedal sensor can be adjusted according to the adjustment proportion and the measured voltage value, which can improve the driving experience of the driver while correcting the opening degree of the accelerator pedal.

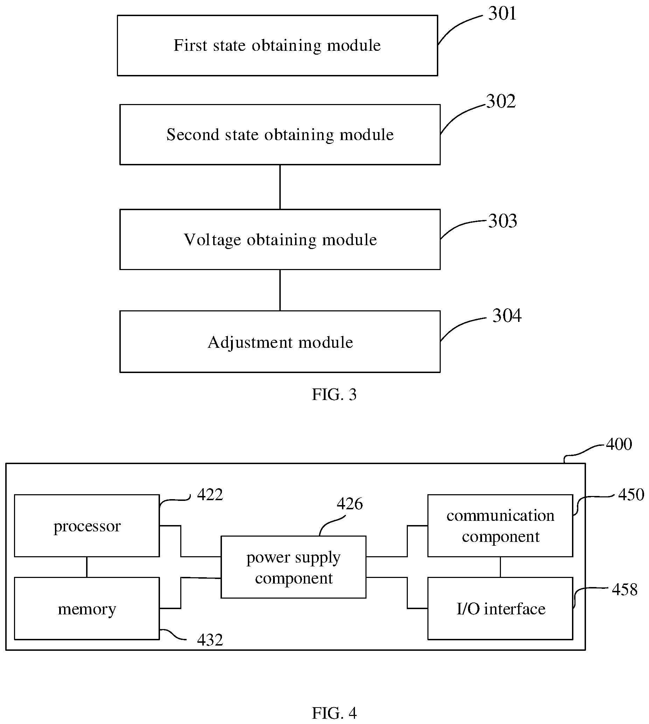

FIG. 3 is a structural schematic diagram of a device for correcting an opening degree of an accelerator pedal provided in an embodiment of the present disclosure, as shown in FIG. 3, the device can include:
a first state obtaining module 301, configured for obtaining a brake depression state corresponding to a brake pedal of a vehicle;
a second state obtaining module 302, configured for determining a state of the accelerator pedal according to the brake depression state;
a voltage obtaining module 303, configured for obtaining a measured voltage value of an accelerator pedal sensor of the vehicle in case that the accelerator pedal is in a non-depression state; and
an adjustment module 304, configured for adjusting a zero voltage of the accelerator pedal sensor according to the measured voltage value to correct the opening degree of the accelerator pedal, and the zero voltage is a voltage of the accelerator pedal at a zero position.

Optionally, the brake depression state includes a brake depression duration and a brake depression depth; and the second state obtaining module 302 is further configured for determining that the state of the accelerator pedal is in the non-depression state when the brake depression duration is greater than or equal to the preset depression duration and the brake depression depth is greater than or equal to the preset depression depth.

Optionally, the voltage obtaining module 303 is further configured for:
obtaining a plurality of voltage values of the accelerator pedal sensor of the vehicle, periodically; and
taking an average value of the plurality of voltage values as the measured voltage value.

Optionally, the adjustment module 304 is further configured for:
obtaining a voltage difference between the measured voltage value and a preset voltage value;
determining a voltage adjustment value according to the voltage difference in case that it is determined that the voltage difference is less than or equal to a preset difference threshold; and
adjusting the zero voltage of the accelerator pedal sensor according to the voltage adjustment value.

Optionally, the adjustment module 304 is further configured for:
obtaining a depressing number of the brake pedal being depressed; and
the step of determining the voltage adjustment value according to the voltage difference includes:
   determining the voltage adjustment value according to the depressing number and the voltage difference.

Optionally, the adjustment module 304 is further configured for:
obtaining an adjustment proportion corresponding to the depressing number; and
taking a product of the voltage difference and the adjustment proportion as the voltage adjustment value.

Optionally, the adjustment module 304 is further configured for:
determining the adjustment proportion corresponding to the depressing number by presetting a proportion correlation relationship, and the proportion correlation relationship includes a corresponding relationship between different depressing numbers and adjustment proportions.

By the above device, the state of the accelerator pedal can be determined according to the brake depression state corresponding to the brake pedal, and the measured voltage value can be obtained when the accelerator pedal is in the non-depression state, such that the measured voltage value is more accurate. Therefore, the adjusted opening degree of the accelerator pedal based on the measured voltage value is also more accurate, and the safety of the vehicle is improved.

FIG. 4 is a block diagram of a controller illustrated according to an exemplary embodiment; as shown in FIG. 4, the controller 400 includes processor 422, which can be one or more in number, and a memory 432, which stores computer programs that can be executed by the processor 422. The computer programs stored in memory 432 can consist of one or more modules each corresponding to a set of instructions. In addition, the processor 422 can be configured to execute the computer programs to perform the method for correcting the opening degree of accelerator pedal opening described above.

In addition, the controller 400 can also include a power supply component 426 and a communication component 450, the power supply component 426 can be configured to perform power management of the controller 400, and the communication component 450 can be configured to implement communication of the controller 400, for example, wired or wireless communication. In addition, the controller 400 can also include an input/output (I/O) interface 458. The controller 400 can operate operating systems based on the memory 432, such as Windows ServerTM, Mac OS XTM, UnixTM, LinuxTM, etc.

In another exemplary embodiment, a computer-readable storage medium is further provided, which includes program instructions, when the program instructions are executed by the processor, to implement the steps of the method for correcting the opening degree of the accelerator pedal described above. For example, the computer-readable storage medium can be the memory 432 including the program instructions which may be executed by the processor 422 of controller 400 to complete the method for correcting the opening degree of the accelerator pedal described above.

In another exemplary embodiment, a computer program product is further provided, which includes computer programs capable of being executed by a programmable device having a portion of code for executing the method for correcting the opening degree of the accelerator pedal described above when executed by the programmable device.

The present disclosure further provides a vehicle that includes the controller.

The preferred embodiments of the disclosure are described in detail in combination with the attached drawings. However, the present disclosure is not limited to the specific details in the above-mentioned embodiments. Within the scope of the technical conception of the present disclosure, a variety of simple variations of the technical scheme of the disclosure may be carried out, and these simple variations are within the scope of protection of the present disclosure. In addition, it should be noted that each specific technical feature described in the above specific embodiments can be combined in any suitable way without contradiction. In order to avoid unnecessary duplication, the various possible combinations are not separately stated in the present disclosure.

In addition, any combination of different embodiments of the present disclosure can also be made, provided that they do not contradict the idea of the present disclosure, they shall also be regarded as disclosed in the present disclosure.

In order to realize the above embodiments, the present disclosure further provides a computing processing apparatus, which includes:
a memory, in which computer-readable codes are stored; and
one or more processors, when the computer-readable codes are executed by one or more processors, the computing processing apparatus performs the aforementioned method for correcting the opening degree of the accelerator pedal.

In order to realize the above embodiments, the present disclosure further provides a computer program, which includes computer readable codes, when the computer readable codes are run on a computing processing apparatus, causes the computing processing apparatus to perform the above-mentioned method for correcting the opening degree of the accelerator pedal.

In order to realize the above embodiments, the present disclosure further provides a computer-readable storage medium in which the computer program is stored.

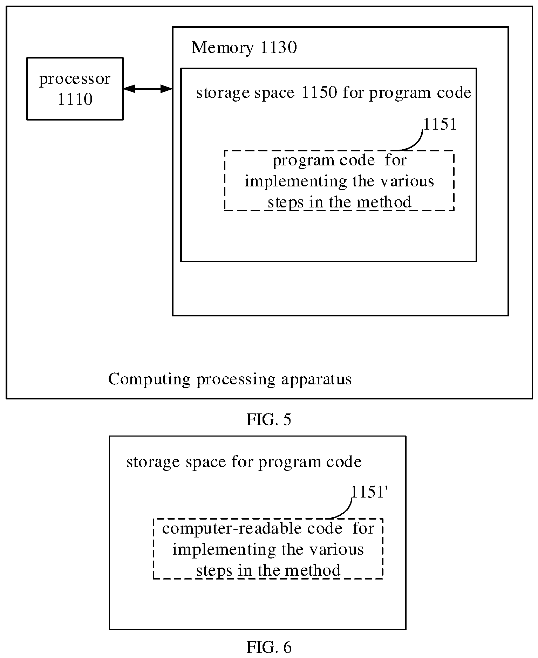

For example, FIG. 5 shows a computing processing apparatus provided in an embodiment of the present disclosure. The computing processing apparatus traditionally includes a processor 1110 and a computer program product in the form of memory 1130 or a computer readable medium. The memory 1130 can be an electronic memory such as a flash memory, EEPROM(electrically erasable programmable read-only memory), EPROM, a hard disk, or ROM. The memory 1130 has the storage space 1150 of the program code 1151 for executing any of the steps in the above method. For example, the storage space 1150 for program code may include individual program code 1151 for implementing the various steps in the method above. Such program code may be read from or written to one or more computer program products. These computer program products include program code carriers such as hard disks, compact disks (CDS), memory cards, or floppy disks. Such computer program products are usually portable or stationary storage units as described in FIG. 6. The storage unit may have memory segments, storage Spaces, etc. arranged similarly to memory 1130 in the computing processing apparatus shown in FIG. 5. Program code can, for example, be compressed in an appropriate form. Typically, the memory unit includes computer-readable code 1151', that is, code that can be read by a processor such as, for example, 1110, which, when run by a computational processing apparatus, causes that computational processing apparatus to perform the various steps in the method described above.

In the description of the specification, the reference terms "an embodiment", "some embodiments", "examples", "specific examples", or "some examples", etc., are used to refer to specific features, structures, materials, or features incorporated in the embodiment or description of the example contained in at least one embodiment or example of the present disclosure. In the specification, schematic representations of the above terms must not be directed to identical embodiments or examples. Further, the specific features, structures, materials or features described can be combined in a suitable manner in any one or more embodiments or examples. In addition, without contradicting each other, those skilled in the art can combine and combine the different embodiments or examples described in the specification and the characteristics of different embodiments or examples.

In addition, terms "the first" and "the second" are only used in describe purposes, and should not be considered as indicating or implying any relative importance, or impliedly indicating the number of indicated technical features. As such, technical feature(s) restricted by "the first" or "the second" can explicitly or impliedly include one or more such technical feature(s). In the description of the present invention, "a plurality of' means two or more, unless there is additional explicit and specific limitation.

Any description of a process or method described in the flowchart or otherwise herein can be understood to represent a module, fragment, or part of code including one or more executable instructions for implementing steps of a custom logic function or process, and the scope of the preferred embodiments of the present disclosure includes additional implementations which can not be in the order shown or discussed. Includes the execution of functions according to the functions involved in a substantially simultaneous manner or in reverse order, which should be understood by those skilled in the art to which the embodiments of the present disclosure belong.

Logic and/or steps expressed in a flowchart or otherwise described herein, for example, can be thought of as a fixed sequence list of executable instructions for performing a logical function, which can be concretely implemented in any computer-readable medium, For use by, or in combination with, an instruction executing system, device or apparatus (such as a computer-based system, a system including a processor, or other system that can take instructions from and execute instructions from an instruction executing system, device or apparatus). For the purposes of the specification, "computer readable medium" can mean any device that can contain, store, communicate, transmit or transmit programs for use by or in conjunction with an instruction executing system, device or apparatus. More specific examples of computer readable media (non-exhaustive list) include the following: an electrical connection unit (electronic device) having one or more wiring, a portable computer cartridge (magnetic device), a random access memory (RAM), a read-only memory (ROM), an erasable and editable read-only memory (EPROM or flash memory), an optical fiber device, and a portable optical disc read-only memory (CDROM). In addition, the computer-readable medium can even be paper or other suitable medium on which the program can be printed, since the program can be obtained electronically, for example, by optical scanning of the paper or other medium, followed by editing, interpreting or, if necessary, processing in other suitable ways, and then stored in a computer memory.

It should be understood that parts of the present disclosure can be implemented with hardware, software, firmware, or a combination thereof. In the above embodiments, multiple steps or methods can be implemented with software or firmware stored in memory and executed by a suitable instruction execution system. For example, if implemented in hardware as in another embodiment, it can be implemented using any of the following technologies known in the art, or a combination thereof: discrete logic circuits with logic gates for implementing logic functions on data signals, application-specific integrated circuits with suitable combinational logic gates, programmable gate arrays (PGA), field programmable gate arrays (FPGA), etc.

Those skilled in the art can understand that all or part of the steps carried by the implementation of the embodiments method can be performed by a program directed to the relevant hardware, and that the program can be stored in a computer readable storage medium that, when executed, includes one or a combination of the steps of the method embodiment.

In addition, the functional units in various embodiments of the present disclosure can be integrated in a single processing module, the units can exist physically separately, or two or more units can be integrated in a single module. The above integrated modules can be realized either in the form of hardware or software function modules. The integrated module, if implemented in the form of a software function module and sold or used as a stand-alone product, can also be stored in a computer-readable storage medium.

The above mentioned storage media can be read-only memory, disk or optical disc. Although embodiments of the present disclosure have been shown and described above, it is understood that the above embodiments are exemplary and cannot be construed as limitations on the present disclosure, and that those skilled in the art can vary, modify, replace, and variant the above embodiments within the scope of the present disclosure.

## Claims

1. A method for correcting an opening degree of an accelerator pedal, **characterized in that** the method comprises:
obtaining a brake depression state corresponding to a brake pedal of a vehicle;
determining a state of the accelerator pedal of the vehicle according to the brake depression state;
obtaining a measured voltage value of an accelerator pedal sensor of the vehicle in case that the accelerator pedal is in a non-depression state; and
adjusting a zero voltage of the accelerator pedal sensor according to the measured voltage value to correct the opening degree of the accelerator pedal, and wherein the zero voltage is a voltage of the accelerator pedal at a zero position.

2. The method according to claim 1, **characterized in that** the brake depression state comprises a brake depression duration and a brake depression depth, and the step of determining the state of the accelerator pedal according to the brake depression state comprises:
determining that the state of the accelerator pedal is in the non-depression state when the brake depression duration is greater than or equal to a preset depression duration and the brake depression depth is greater than or equal to a preset depression depth.

3. The method according to claim 1, **characterized in that** the step of obtaining the measured voltage value of the accelerator pedal sensor of the vehicle comprises:
obtaining a plurality of voltage values of the accelerator pedal sensor of the vehicle, periodically; and
taking an average value of the plurality of voltage values as the measured voltage value.

4. The method according to claim 1, **characterized in that** the step of adjusting the zero voltage of the accelerator pedal sensor according to the measured voltage value comprises:
obtaining a voltage difference between the measured voltage value and a preset voltage value;
determining a voltage adjustment value according to the voltage difference in case that it is determined that the voltage difference is less than or equal to a preset difference threshold; and
adjusting the zero voltage of the accelerator pedal sensor according to the voltage adjustment value.

5. The method according to claim 4, **characterized in that** before the step of determining the voltage adjustment value according to the voltage difference, the method further comprises:
obtaining a depressing number of the brake pedal being depressed;
the step of determining the voltage adjustment value according to the voltage difference comprises:
determining the voltage adjustment value according to the depressing number and the voltage difference.

6. The method according to claim 5, **characterized in that** the step of determining the voltage adjustment value according to the depressing number and the voltage difference comprises:
obtaining an adjustment proportion corresponding to the depressing number; and
taking a product of the voltage difference and the adjustment proportion as the voltage adjustment value.

7. The method according to claim 6, **characterized in that** the step of obtaining the adjustment proportion corresponding to the depressing number comprises:
determining the adjustment proportion corresponding to the depressing number by presetting a proportion correlation relationship, wherein the proportion correlation relationship comprises a corresponding relationship between different depressing numbers and adjustment proportions.

8. A device for correcting an opening degree of an accelerator pedal, **characterized in that** the device comprises:
a first state obtaining module, configured for obtaining a brake depression state corresponding to a brake pedal of a vehicle;
a second state obtaining module, configured for determining a state of the accelerator pedal of the vehicle according to the brake depression state;
a voltage obtaining module, configured for obtaining a measured voltage value of an accelerator pedal sensor of the vehicle in case that the accelerator pedal is in a non-depression state; and
an adjustment module, configured for adjusting a zero voltage of the accelerator pedal sensor according to the measured voltage value to correct the opening degree of the accelerator pedal, and wherein the zero voltage is a voltage of the accelerator pedal at a zero position.

9. A controller, **characterized in that** the controller comprises:
a storage device on which computer programs are stored; and
a processing device, configured for executing the computer programs in the storage device to implement the steps of the method according to any one of claims 1-7.

10. A vehicle, **characterized in that** the vehicle comprises the controller according to claim 9.

11. A computing processing apparatus, **characterized in that** the computing processing apparatus comprises:
a memory, in which computer-readable codes are stored; and
one or more processors, when the computer-readable codes are executed by the one or more processors, causes the computing processing apparatus to implement the method for correcting the opening degree of the accelerator pedal according to any one of claims 1-7.

12. A computer program, comprising computer-readable codes, which when executed on a computing processing apparatus, causes the computing processing apparatus to implement the method for correcting the opening degree of the accelerator pedal according to any one of claims 1-7.

13. A computer readable storage medium, in which the computer program according to claim 12 is stored.
